## Europäisches Patentamt

## European Patent Office

## Office européen des brevets

(19)

(11) Veröffentlichungsnummer: **0 150 415**
**A2**

(12) **EUROPÄISCHE PATENTANMELDUNG**

(21) Anmeldenummer: 84115625.0

(22) Anmeldetag: 17.12.84

(51) Int. Cl.⁴: **C 02 F 11/18,** F 28 F 13/10

(30) Priorität: 28.01.84 DE 3403033

(43) Veröffentlichungstag der Anmeldung: **07.08.85**
**Patentblatt 85/32**

(84) Benannte Vertragsstaaten: **AT BE CH DE FR GB IT LI LU**
**NL SE**

(71) Anmelder: **MECAPEC S.A., Oberseestrasse,**
**CH-8716 Schmerikon/SG (CH)**

(72) Erfinder: **Gujer, Hans, Leberbäumlistrasse 6/8,**
**CH-8153 Rümlang (CH)**

(74) Vertreter: **Vlèl, Georg, Dipl.-Ing., Am Zimmerplatz 16,**
**D-6606 Saarbrücken-Gersweiler (DE)**

(54) Verfahren und Vorrichtung zum kontinuierlichen Behandeln von Schlämmen oder breiförmig vorliegenden Gemischen.

(57) Bei dem Verfahren wird das zu behandelnde Gut im Durchlauf erhitzt, eine gewisse Zeit auf erhöhter Temperatur gehalten, mit Hilfe eines Wärmetauschers abgekühlt und mit der so gewonnenen Energie unmittelbar das frische Gut vorgewärmt. Das behandelte, abgekühlte Gut kann einem Behälter zur Weiterverarbeitung zugeführt werden.

Diese Arbeitsweise ist erfindungsgemäß dadurch möglich, daß der kontinuierlichen Vorwärtsbewegung des Gutes eine Vor- und Rückwärtsbewegung überlagert wird.

Das wesentliche Element einer Vorrichtung zum Durchführen des Verfahrens ist ein Pulsator, der die oszillierende Bewegung der Gutsäule bewirkt.

EP 0 150 415 A2

- 1 -

BESCHREIBUNG

Verfahren und Vorrichtung
zum kontinuierlichen Behandeln von Schlämmen
oder breiförmig vorliegenden Gemischen.

Die Erfindung betrifft ein Verfahren zum kontinuierlichen Behandeln von Schlämmen oder breiförmig vorliegenden Gemischen, wobei das zu behandelnde Gut erhitzt, eine gewisse Zeit auf erhöhter Temperatur gehalten, mit Hilfe eines Wärmetauschers das behandelte Gut abgekühlt und mit der so gewonnenen Energie das zu behandelnde Gut vorgewärmt wird.

Es ist oft notwendig, mit Grobstoffen versetzte Flüssigkeiten vor ihrer Weiterverwendung eine bestimmte Zeit einer erhöhten Temperatur auszusetzen und wieder abzukühlen. So unterschiedliche Medien wie Fruchtpulpen oder Klärschlamm werden im Laufe eines Verarbeitungsprozesses beispielsweise pasteurisiert, um sie haltbar zu machen bzw. zu hygienisieren. Dazu werden sie auf 60° bis 80° C erhitzt, eine gewisse Zeit auf dieser Temperatur gehalten und wieder abgekühlt.

- 4 -

Das Erhitzen und Abkühlen kann indirekt in Wärmetauschern erfolgen. Dabei kommt es bekanntermaßen leicht zum Anbacken des Schlammes oder des sonstigen breiförmig vorliegenden Gemischs. Zur Verhinderung des Anbackens und zur Erreichung eines guten Wärmeüberganges sind hohe Durchgangsgeschwindigkeiten nötig; dies führt jedoch zu kleinen Durchgangsquerschnitten und langen Austauschrohren, die zum Verstopfen neigen.

Der Erfindung liegt die Aufgabe zugrunde, ein Verfahren der eingangs beschriebenen Art zu schaffen, mit dem problemlos und ohne übermäßigen apparativen Aufwand eine Wärmebehandlung von Schlamm oder breiigen Medien möglich ist.

Diese Aufgabe wird erfindungsgemäß dadurch gelöst, daß der kontinuierlichen Bewegung des Schlammes eine Vor- und Rückwärtsbewegung überlagert wird.

Nach einer weiteren Ausbildung der Erfindung ist vorgesehen, daß die Intensität der überlagerten Vor- und Rückwärtsbewegung in den verschiedenen Behandlungszonen unterschiedlich ist.

Es kann auch zweckmäßig sein, die maximale Rückwärtsbewegung größer zu wählen als die durch den kontinuierlichen Transport bewirkte Vorwärtsbewegung.

Eine Vorrichtung zum Durchführen des Verfahrens und Ausbildungen dazu sind in den Ansprüchen 4 bis 7 angegeben.

Die mit der Erfindung erzielten Vorteile bestehen insbesondere darin, daß Schlämme und breiförmige Medien, auch bei kleinen durchzusetzenden Mengen pro Zeiteinheit, in Wärmetauschern erhitzt und wieder abgekühlt werden, ohne daß es zu Anbackungen und damit Verstopfungen kommt. Das neue Verfahren zeichnet sich auch dadurch aus, daß die Vorrichtungen zum Durchführen desselben verhältnismäßig einfach und deshalb kostengünstig herzustellen sind.

Ein Ausführungsbeispiel ist in den Zeichnungen dargestellt.

Es zeigen

Fig. 1    eine Prinzipskizze zur Arbeitsweise des erfindungsgemäßen Verfahrens und

Fig. 2    ein Detail zu Fig. 1.

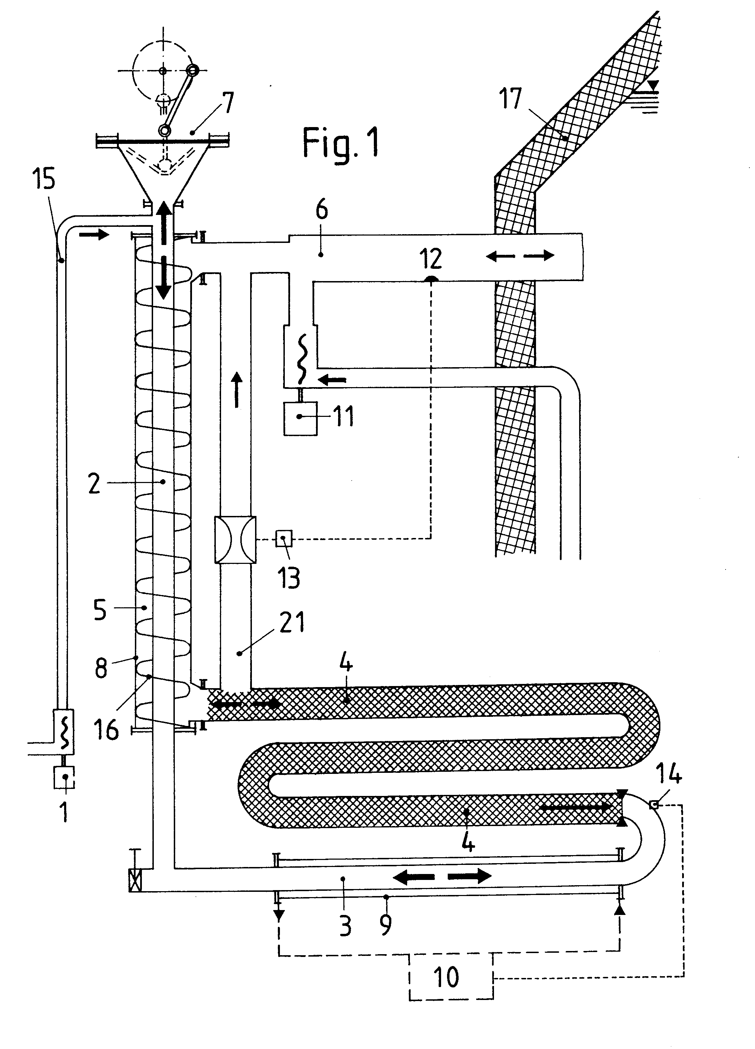

In Fig. 1 fördert eine Pumpe 1 über ein Rohr 15 z.B. Schlamm in das Zentralrohr 2 eines Wärmetauschers 8, von wo es in das Rohr 3 eines Erhitzers 9 gelangt. Dort wird der Schlamm auf beispielsweise 70° C erwärmt und gelangt dann in die Kolonne 4. Letztere ist je nach zu behandelndem Gut im Durchmesser und der Länge zu bemessen, daß alle Teile des Schlammes oder Breies über die vorgeschriebene Zeit die gewünschte Temperatur haben.

Nach Durchlaufen der Kolonne 4, sie kann beim Pasteurisieren von Schlamm als Hygienisierungskolonne bezeichnet werden, gelangt der Schlamm in das äußere Rohr 5 des Wärmetauschers 8. Unter Abgabe eines Teiles seiner Wärme an den im Zentralrohr 2 geförderten frischen Schlamm, wird der von der Kolonne 4 kommende Schlamm über eine Umlenkschnecke 16 und das Rohr 6 einem Behälter 17 zugeführt.

Dieses Verfahren mit einem Wärmetauscher 8 direkt zwischen kaltem (frischem) und warmem (behandeltem) Gut ist erst verwendbar, wenn gemäß der Erfindung gearbeitet wird. Ohne besondere Maßnahmen kommt es nämlich leicht zu Anbackungen und Verstopfungen, insbesondere in dem Zentralrohr 2 und dem äußeren Rohr 5 des Wärmetauschers 8, aber auch in dem Rohr 3 des Erhitzers 9.

Bei dem neuen Verfahren wird das vermieden, indem der gleichförmigen Bewegung des Schlammes oder Breies durch das System eine oszillierende Bewegung überlagert wird. Mit anderen Worten wird einerseits das zu behandelnde Gut von der Pumpe 1 kontinuierlich durch das System (15, 2, 3, 4, 5, 6) gefördert, andererseits durch einen Pulsator 7 vor allem im Bereich des Zentralrohres 2 des Wärmetauschers 8 und dem Rohr 3 des Erhitzers 9 eine zusätzliche Vor- und Rückwärtsbewegung des zu behandelnden Gutes erzwungen. Das kann dadurch geschehen, daß durch den Pulsator 7, der als Membran- oder sonstige Pumpe ausgebildet sein kann, abwechselnd eine bestimmte Menge Gut abgezogen und wieder in das Zentralrohr 2 gepreßt wird. Das Hubvolumen und die Zahl der Hübe pro Zeiteinheit des Pulsators 7 bestimmen die Vor- und Rückwärtsbewegung des Gutes, insbesondere dort, wo die Gefahr des Anbackens groß ist, in dem Zentralrohr 2 und dem Rohr 3 des Erhitzers 9. Das Hubvolumen des Pulsators 7 wird, abgestimmt auf die Förderleistung der Pumpe 1, so gewählt, daß eine ausreichende Vor- und Rückwärtsbewegung des zu behandelnden Gutes vorhanden ist, um ein Anbacken zu vermeiden. In der Kolonne 4, dem äußeren Rohr 5 des Wärmetauschers und dem Rohr 6 ist kein Anbacken z.B. des Schlammes zu erwarten, weshalb bei diesen Abschnitten durch entsprechende Querschnittserweiterung die Intensität der oszillierenden Bewegung des Gutes herabgesetzt werden kann.

Andererseits soll in der Kolonne 4 eine gewisse Hin- und Herbewegung des Gutes vorhanden sein, um eine Durchmischung und somit gleichmäßige Behandlung über den gesamten Querschnitt zu gewährleisten.

Es kann angebracht sein, das Hubvolumen des Pulsators 7 so zu wählen, daß die Rückwärtsbewegung pro Hub größer ist als die durch die Pumpe 1 bewirkte Vorwärtsbewegung des zu behandelnden Gutes, damit ein Anbacken sicher vermieden wird und eventuelle Verstopfungen gelöst werden.

Die Vor- und Rückwärtsbewegung z.B. des Schlammes wird nach Fig. 1 mit einem Pulsator 7 erreicht. Die Erfindung ist auf diese Ausführung nicht beschränkt. So können zwei oder mehrere synchron arbeitende Pulsatoren 7 vorgesehen sein, die an unterschiedlichen Stellen des Systems 2, 3, 4, 5 und 6 wirken.

Am Eingang der Kolonne 4 kann ein Temperaturfühler 14 angeordnet sein, der die Heizung 10 des Erhitzers 9 so steuert, daß die in der Kolonne 4 gewünschte Temperatur gewährleistet ist.

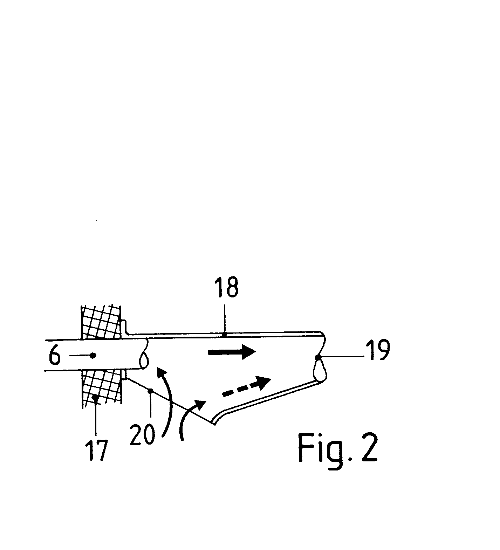

Es ist für die Behandlung von z.B. Klärschlamm bekannt, den Faulprozeß zu beschleunigen, indem Frisch- und Faulschlamm gemischt werden. Das kann dadurch geschehen, daß über eine Rückführpumpe 11 Faulschlamm aus dem Behälter 17 abgezogen und in das Rohr 6 geleitet wird. Zu diesem Zweck ist es erfindungsgemäß auch denkbar, in dem Behälter 17 einen Trichter 18 anzuordnen, wie das in Fig. 2 dargestellt ist. Über die vordere Öffnung 19 kann der über das Rohr 6 geförderte Schlamm in den Behälter 17 fließen. Durch die im unteren Bereich des Trichters 18 angeordnete Öffnung 20 wird infolge Injektorwirkung Faulschlamm nachgezogen und in dem Rohr 6 mit dem ankommenden Schlamm gemischt, was durch das Pulsieren der Gutsäule unterstützt wird.

Die Temperatur in dem Behälter 17 kann auf verschiedene Art und Weise geregelt werden. Eine Möglichkeit besteht darin, ein Rohr 21 mit einem Dosierventil 13 vorzusehen. Ist die Temperatur zu niedrig, was z.B. durch einen Temperaturfühler 12 ermittelt werden kann, so öffnet sich das Dosierventil 13 und ein Teil des Gutes umgeht den Wärmetauscher 8 und führt so dem Behälter 7 die fehlende Energie zu. Über den Temperaturfühler wird auch wieder das Schließen des Dossierventils 13 veranlaßt.

Mit der Erfindung ist ein Verfahren geschaffen worden, mit dem im Durchlauf Schlämme oder breiförmig vorliegende Gemische pasteurisiert bzw. hygienisiert werden können. Bei Anwendung dieses Verfahrens ist eine einfach zu bedienende und zu wartende Anlage realisierbar.

MECAPEC S.A.
CH-8716 Schmerikon

0150415

- 1 -

PATENTANSPRÜCHE

1. Verfahren zum kontinuierlichen Behandeln von Schlämmen oder breiförmig vorliegenden Gemischen, wobei das zu behandelnde Gut erhitzt, eine gewisse Zeit auf erhöhter Temperatur gehalten, mit Hilfe eines Wärmetauschers das behandelte Gut abgekühlt und mit der so gewonnenen Energie das zu behandelnde Gut vorgewärmt wird, dadurch gekennzeichnet, daß der kontinuierlichen Bewegung des Schlammes oder breiförmigen Gemisches eine Vor- und Rückwärtsbewegung überlagert wird.

2. Verfahren nach Anspruch 1, dadurch gekennzeichnet, daß die Intensität der überlagerten Vor- und Rückwärtsbewegung in den verschiedenen Behandlungszonen unterschiedlich ist.

3. Verfahren nach Anspruch 1, dadurch gekennzeichnet, daß die maximale Rückwärtsbewegung größer gewählt wird als die durch den kontinuierlichen Transport bewirkte Vorwärtsbewegung.

- 2 -

4. Vorrichtung zum Durchführen des Verfahrens nach einem oder mehreren der vorhergehenden Ansprüche, dadurch gekennzeichnet, daß zum kontinuierlichen Fördern von zu behandelndem Gut eine Pumpe (1) vorgesehen ist, die mit dem Zentralrohr (2) eines Wärmetauschers (8) und letzteres mit dem Rohr (3) eines Erhitzers (9) verbunden ist, dem Erhitzer (9) eine Kolonne (4) nachgeschaltet ist, die mit dem äußeren Rohr (5) des Wärmetauschers (8) verbunden ist, daß das äußere Rohr (5) an seinem anderen Ende über ein Rohr (6) mit einem Behälter (17) in Verbindung steht, und daß ein mit dem Zentralrohr (2) des Wärmetauschers (8) gekoppelter Pulsator (7) vorgesehen ist.

5. Vorrichtung nach Anspruch 4, dadurch gekennzeichnet, daß im äußeren Rohr (5) des Wärmetauschers (8) eine statische Umlenkschnecke (16) angeordnet ist.

6. Vorrichtung nach Anspruch 4, dadurch gekennzeichnet, daß die Leitungsquerschnitte in den einzelnen Abschnitten (2,3,4,5,6) je nach gewünschter Intensität der Vor- und Rückwärtsbewegung des Gutes unterschiedlich groß sind.

7. Vorrichtung nach Anspruch 4, dadurch gekennzeichnet, daß in dem Behälter (17) ein Trichter (18) mit einer vorderen Öffnung (19) und einer im unteren Bereich angeordneten Öffnung (20) vorgesehen ist.

# Fig.1

Fig. 2